# EUROPÄISCHE PATENTSCHRIFT

(11) **EP 2 981 796 B1**
(45) Veröffentlichungstag und Bekanntmachung des Hinweises auf die Patenterteilung: **02.08.2017**
(21) Anmeldenummer: 14721215.3
(22) Anmeldetag: 02.05.2014
(51) Int. Cl.: G01L 1/04, G01L 5/00

(54) **KRAFT-MESSVORRICHTUNG**
FORCE-MEASURING DEVICE
DISPOSITIF DE MESURE DE FORCES

(30) Priorität: 03.05.2013 DE 102013007535
(43) Veröffentlichungstag der Anmeldung: 10.02.2016
(73) Patentinhaber: Uniflex-Hydraulik GmbH, 61184 Karben (DE)
(72) Erfinder: VON WAITZ, Harald, 63796 Kahl am Main (DE); BAUMGARTNER, Carsten, 35321 Laubach (DE); HEJPLIK, Vaclav, 63128 Dietzenbach (DE)
(74) Vertreter: Grättinger Möhring von Poschinger Patentanwälte Partnerschaft
(86) Internationale Anmeldenummer: PCT/EP2014/001179
(87) Internationale Veröffentlichungsnummer: WO 2014/177284

(56) Entgegenhaltungen:
- DD-A1- 147 874
- DE-A1-102005 050 787
- DE-B- 1 059 687
- KR-A- 20090 120 326

## Beschreibung

Die Erfindung betrifft eine Kraft-Messvorrichtung zur integrierenden Messung mindestens dreier zentrisch wirkender Radialkräfte, insbesondere für Radialpressen oder Spannzangen, umfassend eine zu einer Messachse konzentrische, mindestens ein Dehnelement umfassende Dehnelementanordnung.

Bei vielen technischen Anwendungen, insbesondere im Zusammenhang mit Radialpressen und Spannzangen, können drei oder mehr Radialkräfte zentrisch, d.h. in Richtung einer zentralen Messachse wirken. Die Anzahl der auftretenden Radialkräfte kann bei einer Radialpresse beispielsweise von der Anzahl vorhandener Pressbacken bestimmt sein. Es besteht ein Bedürfnis, genannte Radialkräfte in Ihrer Gesamtheit im Sinne einer räumlich integrierenden Messung erfassen und daraus eine Wirkkraft ermitteln zu können, welche die Überlagerung der wirkenden Radialkräfte repräsentiert.

Aus DE 689 15 875 T2 ist eine Vorrichtung bekannt, mit welcher eine radial auf mehrere Rippen eines Rippenkäfigs wirkende Kraft eines Fluidmediums in eine verstärkte axial wirkende Kraft einer mit den Rippen gekoppelten Druckstange gewandelt wird. Zur Umwandlung der Radialkraft in die axiale Kraft sind die Rippen mittels einer Feder vorzuspannen, deren Federspannung im Laufe der Zeit nachlässt. Das gleiche gilt für die Rippen, wenn diese aus elastischem Material hergestellt sind. Mittels der axialen Kraft der Druckstange kann ein Schalter betätigt werden. Die DE 689 15 875 T2 liefert noch keinen Hinweis, die Vorrichtung zum Messen von Kräften einzusetzen. Sie wäre dazu auch nicht gut geeignet, weil sich die Nachgiebigkeit der vielen elastischen Elemente nachteilig auf die Messgenauigkeit auswirken würde. Des Weiteren sind die Rippen erfindungsgemäß sehr schwach und können keinen großen Kräften widerstehen. Insbesondere wenn die Rippen, wie dies alternativ ebenfalls vorgesehen sein soll, schwenkbar aneinander befestigt würden, wäre die Vorrichtung nicht in der Lage, hohe Kräfte, wie sie beispielsweise in Radialpressen oder beim Einsatz von Spannzangen auftreten, auszuhalten und messen zu können.

Die DE 40 25 353 A1 offenbart zwei im Wesentlichen zylindrische Sensoren zur Messung von auf ihre jeweiligen Mantelflächen senkrecht einwirkenden Kräften. Es ist vorgesehen, dass der Sensor beispielsweise in eine Bohrung eingetrieben wird, um in diesem dauernde Radialkraftvariationen zu messen. Gemäß einer Ausführungsform weist der Sensor dazu einen rohförmigen piezoelektrischen Doppelkristall auf, der auf Radialkräfte anspricht. Eine solche Lösung ist sehr teuer. Gemäß einer weiteren Ausführungsform ist ein mit Öl gefüllter Sensorkörper vorgesehen. Wirken Radialkräfte auf den Sensorkörper, so erfährt das in ihm befindliche Öl eine Druckänderung, welche durch einen piezoresistiven Sensor übertragen. Für die Messung der Kraft durch die beschriebenen beiden Sensoren ist eine elektromechanische Wandleranordnung erforderlich, eine direkte Messung mit rein mechanischen Mitteln ist nicht möglich. Des weiteren eigenen sich die Sensoren eher für langzeitdynamische Kraftänderungen und weniger für sich kurzzeitig verändernde Radialkräfte, wie sie bei einer Radialpresse oder einer Spannzange auftreten.

Durch die US 4 259 863 A wird eine sehr aufwendige Vorrichtung zur Messung von Kräften und Biegemomenten in der und um die x- , y- sowie z-Achse mittels einer Mehrzahl an Sensoren und Federn gezeigt. Diese Vorrichtung ist jedoch nur sehr bedingt für die Erfassung von Radialkräften geeignet.

Die DE 1059687 B, aus der der Oberbegriff des Anspruchs 1 abgeleitet ist, lehrt ein Gerät zum Messen der mittleren Spannung mehrerer parallel zueinander gespannter Drähte. Dabei wird als Maß für die mittlere Spannung in den parallel zueinander gespannten Drähten jene Kraft ermittelt, die erforderlich ist, um die Drähte zu spreizen. Das Gerät weist zu diesem Zweck ein längliches, sich längs der Achse erstreckendes, in Achsrichtung elastisch verformbares Dehnglied, mehrere um das Dehnglied herum angeordnete, von den Drähten zu beaufschlagende, auf das Dehnglied wirkende Kniehebel und Mittel zum Messen der Längenänderung des Dehnungsglieds auf. Die Längenänderung des Dehnelements wird dabei durch das Schwingungsverhalten einer - durch einen in dem Dehnelement längs der Achse gespannten Draht gebildeten - Saite, die endseitig an beiden Spreizgliedern fixiert ist, ermittelt. Die - sich mit der Längendehnung ändernde - Frequenz der Saite wird mittels an dem Dehnelement selbst angebrachter Elektromagnete, welche auch der Schwingungsanregung der Saite dienen, erfasst.

Die DE 102005050787 A1 offenbart ein Verbindungselement, welches zur Messung einer Vertikalkraft geeignet ist. Es verfügt über ein durch die Vertikalkraft beaufschlagbares Bauteil, welches zwischen zwei federnd vorgespannten, konischen, auf einer horizontalen Achse verschiebbar geführten Scheiben angeordnet ist. Das Ausmaß der Verschiebung der beiden Scheiben zueinander auf der Achse stellt ein Maß für die auf das Bauteil einwirkende Axialkraft dar.

Die KR 1020090120326 A befasst sich mit der Ermittlung von Spannungen in einem Rohr bei dessen axialer Dehnung und/oder von Eigenschaften des Materials eines axial gedehnten Rohrs.

Weiteren technologischen Hintergrund der Erfindung bilden - ohne jedoch eine Dehnelementanordnung der eingangs genannten Art aufzuweisen - insoweit auch die DE 10051010 A1 und die EP 419129. Durch die DE 10051010 A1 ist ein Kraftmesswerkzeug gezeigt, bei dem zwei Hebel an die Pressgeometrie eines Vierdorn-Presskopfes angepasst sind und die bei Verpressung auf einen Drucksensor wirken. Die EP 0 419 129 A1 zeigt eine Presse mit in der Presse angeordneten Kraft-Messvorrichtungen, z.B. Dehnungs-Messstreifen.

Mit keiner der zitierten Vorrichtungen ist es in befriedigender Weise möglich, mit einfachen Mitteln eine genaue und zuverlässige integrierende Messung, insbesondere in Radialpressen oder Spannzangen, im vorstehend genannten Sinne durchzuführen.

Im Hinblick auf die vorstehend beschriebenen Probleme, Beschränkungen und Nachteile der aus dem Stand der Technik bekannten Vorrichtungen ist es Aufgabe der Erfindung, eine einfache Kraft-Messvorrichtung zu schaffen, mit welcher eine verbesserte, integrierende Messung von Radialkräften, insbesondere in Radialpressen oder Spannzangen, möglich ist.

Die Aufgabe wird mit der Kraft-Messvorrichtung gemäß Anspruch 1 gelöst. Die erfindungsgemäße Kraft-Messvorrichtung zeichnet sich in funktioneller Kombination mit den eingangs erwähnten Merkmalen dadurch aus, dass die Kraft-Messvorrichtung mindestens drei, in Umfangsrichtung zueinander beabstandete Druckglieder umfasst, wobei mit dem mindestens einem Dehnelement endseitig zwei Spreizglieder verbunden sind, die Druckglieder sich über Druckschrägen an korrespondierenden Gleitschrägen der Spreizglieder abstützen, an einem ersten der beiden Spreizglieder ein Übertragungsglied fixiert ist und zwischen dem zweiten der beiden Spreizglieder und dem Übertragungsglied ein Messaufnehmer wirkt.

Mit der erfindungsgemäßen Kraft-Messvorrichtung ist es möglich, mindestens drei an ihr angreifende Radialkräfte intern in eine zu der Summe der Radialkräften senkrechte Axialkraft, welche der Wirkkraft entspricht, zu wandeln und diese zu messen. Der Wert der Axialkraft wird dabei aus den Ausdehnungen der Spreizglieder und eventuell auch des wenigstens einen Dehnelements in axialer Richtung ermittelt.

Im Folgenden wird - sofern nichts anderes erwähnt ist - im Rahmen der Erfindungsbeschreibung auf eine typische Radialpresse mit wenigstens drei Pressbacken Bezug genommen, welche mittels geeigneter Kraftmittel radial nach innen senkrecht zu einer gemeinsamen zentralen Achse verschoben werden können, wodurch ein zwischen den Pressbacken befindliches Werkstück radial gepresst werden kann. Für eine solche Radialpresse stellt die Erfindung ein zwar bevorzugtes, jedoch nicht auf dieses beschränktes Anwendungsgebiet dar. Ebenso ist es mit der erfindungsgemäßen Kraft-Messvorrichtung beispielsweise möglich, eine Wirkkraft zu messen, welche durch eine Spannzange erzeugt wird.

Die Kraft-Messvorrichtung weist wenigstens drei Druckglieder auf, an denen die zentrisch wirkenden Radialkräfte der Pressbacken angreifen können. Zur Messung der Wirkkraft der Pressbacken kann die Kraft-Messvorrichtung anstatt eines Werkstücks zwischen den Pressbacken positioniert werden. Durch diese bevorzugte und für die weitere Beschreibung zugrunde gelegte Anwendung ist es besonders einfach möglich, die Wirkkraft sehr genau zu messen. Darüber hinaus ist es jedoch auch möglich, sowohl ein Werkstück als auch die Kraft-Messvorrichtung gleichzeitig zwischen den Pressbacken zu positionieren, was jedoch Nachteile in Bezug auf die Handhabbarkeit und die Messgenauigkeit nach sich ziehen kann. Besonders bevorzugt stimmt die Anzahl der zu messenden Radialkräfte mit der Anzahl der Druckglieder überein. Weist beispielsweise eine Radialpresse vier Pressbacken auf, durch welche vier Radialkräfte wirken können, so ist es bevorzugt vorgesehen, dass die Kraft-Messvorrichtung vier Druckglieder aufweist, welche derart angeordnet sind, dass sie mit den Pressbacken korrespondieren. Die Pressbacken können radial in Richtung der zwischen ihnen positionierten Kraft-Messvorrichtung verschoben werden. Wenn die Anzahl der Pressbacken mit der Anzahl der Druckglieder übereinstimmt, die Pressbacken soweit in Richtung der Kraft-Messvorrichtung verschoben wurden, dass die Pressbacken an den Druckgliedern anliegen und weiter eine Kraft in die Pressbacken eingeleitet wird, so können sich diese Kräfte auf die Druckglieder übertragen und diese dadurch radial senkrecht zur Messachse verschoben werden.

Die Kraft-Messvorrichtung kann im Wesentlichen zylinderförmig sein und an ihrem Umfang Aussparungen zur Aufnahme der Druckglieder aufweisen. Jedes Druckglied kann bevorzugt in jeweils eine Aussparung eingesetzt und durch geeignete Mittel gegen ein unbeabsichtigtes Herauslösen aus den Aussparungen gesichert werden. Jedes Druckglied kann durch die auf es übertragenen Radialkräfte im erfindungsgemäßen Sinne um einen Verschiebeweg radial in Richtung der Messachse verschoben werden. Beispielsweise kann zum Schutze der restlichen Kraft-Messvorrichtung vor Radialkrafteinwirkungen der Pressbacken vorgesehen sein, die Druckglieder im unbelasteten Zustand um bis zu der Länge des Verschiebewegs oder darüber hinaus radial über den Umfang der Kraft-Messvorrichtung hervorstehen zu lassen. Damit die Druckglieder sich während ihrer radialen Verschiebung in Richtung der Messachse nicht gegenseitig blockieren, grenzen die Druckglieder nicht unmittelbar aneinander, sondern sind voneinander beabstandet.

Das wenigstens eine Dehnelement ist zwischen den Druckgliedern angeordnet und endseitig mit zwei Spreizgliedern verbunden. Das Dehnelement und die Spreizglieder sind aus einem elastischen Material hergestellt und insbesondere die Spreizglieder sind dazu eingerichtet, sich in axialer Richtung, d.h. quer zu der Richtung der Radialkräfte sowie in Richtung und parallel zu der Messachse ausdehnen und wieder zusammenziehen zu können. Die erfindungsgemäße Ausdehnung wird hervorgerufen durch die radiale Verschiebung der Druckglieder senkrecht zur Messachse.

Um die senkrecht zur Messachse wirkenden Radialkräfte der Druckglieder in eine in Richtung der Messachse wirkende Axialkraft wandeln zu können, welche zu einer Ausdehnung der Spreizglieder in Richtung und parallel zur Messachse führt, weisen die Druckglieder Druckschrägen und die Spreizglieder korrespondierende Gleitschrägen auf. Im unbelasteten Zustand, d.h. wenn keine Radialkräfte auf die Druckglieder wirken, befinden sich die Druckglieder, das Dehnelement und die Spreizglieder in ihren Ausgangspositionen, in denen sich die Druckglieder über die Druckschrägen auf den Gleitschrägen der Spreizglieder abstützen. Auf den Spreizgliedern lastet somit nur das Eigengewicht der Druckglieder, welches zu keiner Ausdehnung der Spreizglieder im erfindungsgemäßen Sinne führt und gegebenenfalls beispielsweise als Offset durch entsprechend geeignete Mittel aus der Messung herausgerechnet werden kann. Die Spreizglieder und das Dehnelement sind im Zusammenwirken dazu eingerichtet, die Druckglieder im unbelasteten Zustand in einem für sie vorgesehenen radialen Abstand von der Messachse zu halten, was z.B. durch die Wahl hierzu geeigneter Elastizitätsmodule, Geometrien und Verbindungen von Dehnelement und Spreizgliedern erreicht werden kann. Verschieben sich die Druckglieder aufgrund auf sie übertragener Radialkräfte quer zur Messachse, so kann über die Druckschrägen und die Gleitschrägen eine zu der Summe der Radialkräfte proportionale Axialkraft auf die Spreizglieder übertragen und diese dadurch in Richtung und parallel zur Messachse gedehnt werden, wobei auch eine Dehnung des Dehnelements möglich ist. Verringert sich die auf die Druckglieder wirkende Radialkraft, so kann sich die Ausdehnung der Spreizglieder und gegebenenfalls auch des Dehnelements wieder entsprechend verringern, bis sich die Spreizglieder, das Dehnelement und die Druckglieder im entlasteten Zustand der Druckglieder wieder in ihren jeweiligen Ausgangspositionen befinden.

An einem der Spreizglieder ist ein Übertragungsglied fixiert. Dieses dient dazu, die Axialkraft einem Messaufnehmer zu deren Messung zuzuführen. Der Messaufnehmer wirkt zwischen dem zweiten der Spreizglieder und dem Übertragungsglied. Das zweite der Spreizglieder kann beispielsweise in axialer Richtung ein Gegenlager für den Messaufnehmer bilden und der Messaufnehmer mit dem Übertragungsglied fest verbunden sein oder mit diesem in Kontakt stehen und dessen Bewegung in axialer Richtung durch den Einsatz entsprechender Mittel, z.B. einer Feder, folgen. Durch die Fixierung des Übertragungsglieds an dem ersten Spreizglied können dann die Ausdehnungen beider Spreizglieder und, sofern vorhanden, auch des Dehnungsglieds auf das Übertragungsglied übertragen und somit von dem Messaufnehmer erfasst werden.

Gemäß einer ersten Ausführungsform wird die Dehnelementanordnung durch eine Dehnhülse gebildet, um welche herum die Druckglieder in Umfangsrichtung voneinander und radial zu der Dehnhülse beabstandet sind. Die Dehnelementanordnung besteht aus einem Dehnelement, welches durch eine Dehnhülse gebildet wird. Die Dehnhülse ist ein zentrales Element, von dessen Mantelfläche beabstandet in Umfangsrichtung voneinander beabstandete Druckglieder angeordnet sind. Diese Ausführungsform ermöglicht es, Radialkräfte besonders gleichmäßig in eine Axialkraft wandeln zu können, wodurch eine besonders genaue Kraftmessung möglich ist. Weiterhin wird eine besonders feste Verbindung zwischen der Dehnhülse und den mit dieser verbundenen Spreizgliedern ermöglicht. Das Übertragungsglied kann außerdem besonders gut innerhalb der Dehnhülse angeordnet und durch diese geführt werden. Zwischen den Druckgliedern und dem Dehnelement ist ein radialer Spalt vorgesehen, um es auf besonders einfache Art zu ermöglichen, dass durch die radiale Bewegung der Druckglieder die Spreizglieder in axialer Richtung gedehnt, die Dehnhülse jedoch nicht in radialer Richtung gequetscht wird. Die Materialstärke der Dehnhülse ist im Wesentlichen nur durch die Aussparungen für die Aufnahme der Druckglieder und des Übertragungsglieds begrenzt. Dadurch kann die Materialstärke besonders hoch gewählt werden, was sich günstig auf die Stabilität der Dehnhülse auswirkt und wodurch besonders hohe Wirkkräfte gemessen werden können.

Gemäß einer zweiten Ausführungsform ist vorgesehen, dass die Dehnelementanordnung durch mehrere jeweils zwischen zwei benachbarten Druckgliedern, parallel zur Messachse angeordnete Dehnstangen gebildet wird. Die Dehnelementanordnung besteht aus mehreren Dehnelementen, welches jeweils durch eine Dehnstange gebildet werden. Die mehreren Dehnstangen sind konzentrisch um die Messachse herum angeordnet. Jede Dehnstange ist endseitig mit jeweils zwei Spreizgliedern verbunden. Die Dehnstangen bilden eine besonders Material sparende Ausführungsform der Dehnungsanordnung, wodurch das Gewicht der Kraft-Messvorrichtung und deren Kosten gesenkt werden können. Vorteilhaft ist weiterhin, dass das Übertragungsglied besonders leicht geführt werden kann.

Besonders vorteilhaft ist vorgesehen, dass das Dehnelement aus einem Material mit geringerem Elastizitätsmodul besteht als die Druckglieder. Hierdurch wird ein Beitrag geleistet, dass auf die Druckglieder wirkende Radialkräfte zu einer besonders stark ausgeprägten Dehnung des Dehnelements führen können. Somit kann eine Verschiebung der Druckglieder senkrecht zur Messachse eine besonders große Gesamtausdehnung des mindestens einen Dehnelements und der mit diesem verbundenen Spreizgliedern hervorrufen, wodurch die Sensitivität der Kraft-Messvorrichtung erhöht werden kann.

Weiterhin ist es besonders vorteilhaft, wenn die Spreizglieder mit dem Dehnelement eine einstückige Einheit bilden. Auf diese Weise kann eine besonders hohe Festigkeit der Verbindung zwischen Dehnelement und Spreizgliedern erreicht werden, was sich auch positiv auf die Lebensdauer der Dehnhülse und der Spreizglieder auswirken kann. Weiterhin ist es vorteilhaft, dass der Aufwand für die Verbindung zwischen den Spreizgliedern und dem Dehnelement entfallen kann.

In einer weiteren vorteilhaften Ausführungsform ist vorgesehen, dass die Spreizglieder eine größere radiale Erstreckung aufweisen als das Dehnelement. Dadurch können die Gleitschrägen der Spreizglieder den Druckschrägen der Druckglieder eine besonders lange Führung bieten.

Sind die beiden Spreizglieder in Form von Endscheiben ausgeführt, so kann ein Beitrag dazu geleistet werden, zwei durchgängige, endseitig an den Druckgliedern anliegende Spreizglieder bereitzustellen, welche in sich eine besonders hohe Festigkeit aufweisen.

Besonders vorteilhaft ist es auch, wenn dass Übertragungsglied als axial angeordnete Übertragungsstange ausgeführt ist. Diese kann besonders exakt geführt werden. Die Übertragungsstange ist dazu eingerichtet, axiale Zug- und Druckkräfte aufzunehmen. Dadurch ist es mittels der Übertragungsstange auf besonders einfache Art möglich, sowohl eine Zunahme als auch eine Abnahme der Axialkraft und damit auch der auf die Druckglieder wirkenden Radialkräfte zu erfassen.

In einer weiteren Ausführungsform ist vorgesehen, dass die Gleitschrägen an den beiden Spreizgliedern spiegelbildlich zueinander ausgeführt sind. Hierdurch können die an den einzelnen Druckgliedern angreifenden Radialkräfte besonders gleichmäßig auf die zugehörigen Spreizglieder übertragen werden. Hierdurch wird ein Beitrag geleistet, die Messgenauigkeit zu steigern und die Spreizglieder gleichmäßig zu belasten. Letzteres kann sich insbesondere positiv auf die Lebensdauer der Spreizglieder auswirken.

Besonders vorteilhaft ist es, wenn die Gleitschrägen hin zur Messachse konvergieren. Durch diese Geometrie können Radialkräfte, welche in Richtung der Messachse wirken, besonders effektiv eine Dehnung der Spreizglieder in axialer Richtung herbeiführen.

Gemäß einer weiteren Ausführungsform sind die Druckglieder endseitig über Sicherungselemente mit radialem Spiel an den Spreizelementen lagegesichert. Die Sicherungselemente können die Druckglieder besonders zuverlässig, ohne Verkanten und durch die beidseitige Sicherung auch redundant davor schützen, sich aus den Aussparungen der Kraft-Messvorrichtung unvorhergesehen und unerwünscht weit heraus zu bewegen. Durch das radiale Spiel können Biegungen der Sicherungselemente auf besonders einfache Art verringert werden, wenn sich die Druckglieder radial in Richtung der Messachse bewegen.

Weiterhin ist es besonders vorteilhaft, wenn die Kraft-Messvorrichtung endseitig mindestens eine Handhabe aufweist. Dies erleichtert insbesondere den mobilen Einsatz der Kraft-Messvorrichtung. Im Hinblick auf den Einsatz in Radialpressen kann durch eine solche Handhabe die Kraft-Messvorrichtung besonders sicher durch einen Bediener zwischen den Pressbacken positioniert werden. Die Kraft-Messvorrichtung kann dadurch auf der Endseite, an der keine Handhabe angeordnet ist, besonders kurz bauen. Besonders vorteilhaft kann auch beidseitig endseitig jeweils eine Handhabe vorgesehen sein, wodurch eine beidseitige Bedienbarkeit der Kraft-Messvorrichtung besonders leicht ermöglicht wird.

In einer weiteren Ausführungsform ist der Messaufnehmer mit einer Messuhr ausgestattet. Die durch den Messaufnehmer erfassten Werte können damit besonders einfach durch entsprechende Anzeigeeinheiten ausgegeben werden, ohne dass eine elektronische Wandlung nötig ist. Ist der Messaufnehmer alternativ mit einem elektrischen Signalwandler ausgestattet, so können die von dem Messaufnehmer erfassten Werte in besonders vielfältiger Weise beispielsweise Anzeige-, Auswerte- oder Steuerungseinheiten zugeführt werden.

Weiterhin ist es vorteilhaft, wenn die Kraft-Messvorrichtung acht Druckglieder aufweist. Diese Anzahl an Druckgliedern ist besonders gut für die Erfassung von Radialkräften geeignet, die bei gängigen Radialpressen mit acht Pressbacken zum Einsatz kommen.

Schließlich ist vorteilhaft vorgesehen, dass die Druckschrägen und die Gleitschrägen durch korrespondierende Flächen gebildet werden. Die korrespondierenden Flächen können besonders einfach durch ebene Flächen oder runde bzw. kegelig ausgedrehte Flächen ausgebildet sein. Bei einer Kraft-Messvorrichtung mit acht Druckgliedern bieten sich insbesondere in ihrer Gesamtheit octagonal ausgestaltete Flächen an. Dadurch kann ein Beitrag dazu geleistet werden, dass die Druckglieder stets mit einem gleich großen Teil ihrer Druckflächen auf gleich großen Teilen der Gleitschrägen der Spreizglieder gleiten.

Im Folgenden die Erfindung anhand der Zeichnung näher erläutert. Hierbei zeigt:
- Fig. 1: einen teilweisen Längsschnitt durch eine Ausführungsform der erfindungsgemäßen KraftMessvorrichtung in unbelastetem Zustand,
- Fig. 2a: eine Seitenansicht einer weiteren Ausführungsform der erfindungsgemäßen KraftMessvorrichtung mit mehreren Dehnstangen und
- Fig. 2b: einen Querschnitt durch die KraftMessvorrichtung aus Fig. 2a gemäß Schnittführung B-B.

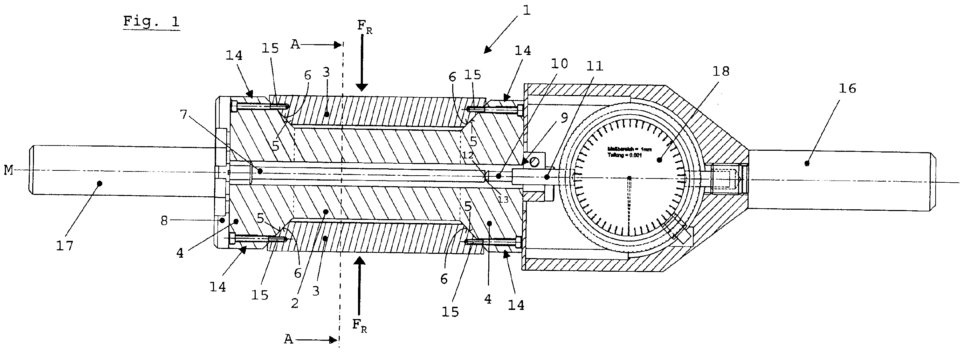

Fig. 1 zeigt eine erfindungsgemäße Kraft-Messvorrichtung 1 zur Messung von zentrisch senkrecht zu einer Messachse M wirkenden Radialkräften F_{R}. Eine Dehnelementanordnung umfasst ein einziges Dehnelement, welches durch eine zentrale Dehnhülse 2 gebildet wird. Das Kraft-Messgerät 1 umfasst weiterhin acht in Umfangsrichtung zu einander beabstandete Druckglieder 3. Die Kraft-Messvorrichtung 1 befindet sich in Fig. 1 in unbelastetem Zustand, d.h. es wirken keine externen Radialkräfte F_{R} auf die Druckglieder 3 (F_{R}=0).

Die Dehnhülse 2 ist endseitig mit jeweils einem Spreizglied 4 verbunden, wobei die Dehnhülse 2 mit den Spreizgliedern 4 eine einstückige Einheit bildet und die Spreizglieder 4 in Form von Endscheiben ausgeführt sind. Die Einheit aus Dehnhülse 2 und Spreizgliedern 4 besteht aus einem Material mit einem geringeren Elastizitätsmodul als die Druckglieder 3. Die Druckglieder 3 stützen sich über Druckschrägen 5 an korrespondierenden Gleitschrägen 6 der Spreizglieder 4 ab. Die Gleitschrägen 6 sind dabei spiegelbildlich zueinander ausgeführt.

Die Übergänge zwischen der Dehnhülse 2 und den Spreizgliedern 4 sind in Fig. 1 durch zur Messachse M senkrechte, gestrichelte Linien angedeutet. Die Übergänge werden definiert durch die inneren Enden der Gleitschrägen 6 als den innersten Angriffspunkten für die Druckschrägen 5 der Druckglieder 3. Die Druckschrägen 5 und die Gleitschrägen 6 sind ebene, korrespondierende Flächen und konvergieren in Richtung der Messachse M. Die Spreizglieder 4 weisen durch die Gleitschrägen 6 eine größere radiale Erstreckung auf als das Dehnelement 2.

An dem in Fig. 1 links dargestellten Spreizglied 4 ist ein Übertragungsglied in Form einer Übertragungsstange 7 mittelbar über eine Halterungsanordnung 8 befestigt. Zwischen dem in Fig. 1 rechts dargestellten Spreizglied 4 und dem Übertragungsglied 7 wirkt ein Messaufnehmer 9, welcher dazu eingerichtet ist, die auf die Übertragungsstange 9 wirkende Axialkraft zu messen. Ein Bolzen 10 ist in eine Hülse 11 des Messaufnehmers 9 ein- und ausfahrbar. Der Bolzen 10 ist durch eine nicht dargestellte Feder in die ausgefahrene Stellung vorgespannt und berührt mit seiner Stirnseite 12 eine korrespondierende Stirnseite 13 der Übertragungsstange 7. Bei einer Verschiebung der Übertragungsstange 7 in die von dem Bolzen 10 abgewandte Richtung wird der Bolzen 10 von der Feder nachgeführt, wodurch die Lageänderung der Übertragungsstange 7 und damit auch die auf diese wirkende Axialkraft erfasst und durch eine Messuhr 18 angezeigt werden kann. Entsprechendes gilt für eine Bewegung der Übertragungsstange 7 in die entgegengesetzte Richtung.

Auf jedes der Druckglieder 3 kann eine Radialkraft F_{R} übertragen werden. Wenn Radialkräfte F_{R} auf die Druckglieder 3 übertragen werden, so werden Letztere radial senkrecht zur Messachse M verschoben. Dabei gleiten die Druckschrägen 5 der Druckglieder 3 auf den Gleitschrägen 4 der Spreizglieder 6. Die Spreizglieder 4 und auch die Dehnhülse 2 werden dadurch in Axialrichtung quer zu der Richtung der Radialkräfte F_{R} bzw. in Richtung und parallel zur Messachse M um eine Strecke gedehnt, welche proportional zu der Überlagerung der auf die Druckglieder 3 wirkenden Radialkräfte F_{R} ist. Die Übertragungsstange 7 bewegt sich zusammen mit der Halterungsanordnung 8 in Axialrichtung nach links. Der Bolzen 10 wird um die gleiche Strecke wie die Übertragungsstange 7 und die Halterungsanordnung 8 aus der Hülse 11 ausgefahren.

Jedes Druckglied 3 ist endseitig über Sicherungselemente 14 lagegesichert. Dazu sind die Druckglieder 3 beidseitig endseitig in Axialrichtung gebohrt. Die Spreizglieder 4 weisen korrespondierende Bohrungen in Axialrichtung auf. In den korrespondierenden Bohrungen der Druckglieder 3 und der Spreizglieder 4 stecken Sicherungsstifte 15, welche einen geringeren Außendurchmesser haben als die Bohrungsdurchmesser der Druckglieder 3 und Spreizglieder 4, wodurch die Druckglieder 3 mit radialem Spiel lagegesichert sind. Die Kraft-Messvorrichtung weist ferner beidseitig endseitig jeweils eine Handhabe 16, 17 auf.

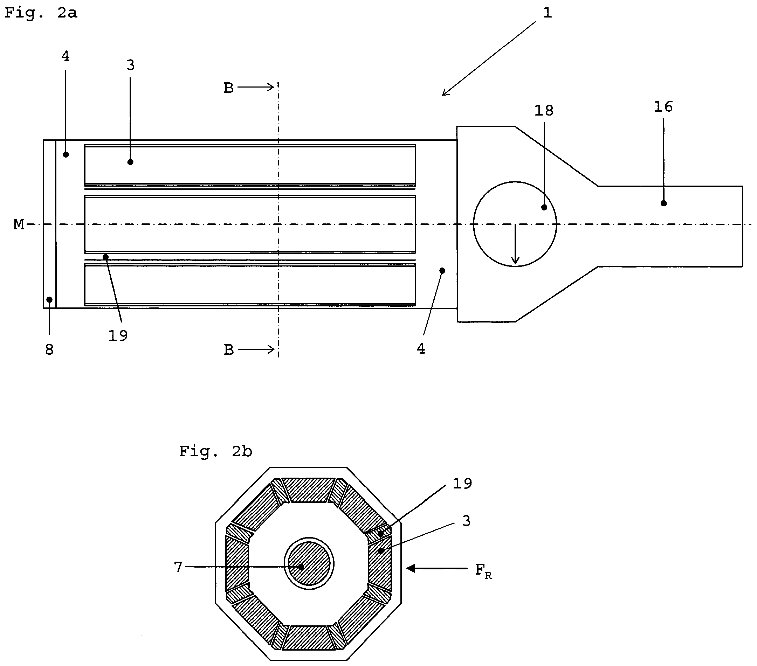

Fig. 2a und Fig. 2b zeigen eine weitere Ausführungsform der erfindungsgemäßen Kraft-Messvorrichtung 1, welche keine Dehnhülse, sondern insgesamt acht jeweils zwischen zwei der ebenfalls insgesamt acht Druckglieder 3 angeordnete, und von Letzteren in Umfangsrichtung beabstandete Dehnstangen 19 aufweist. Der besseren Übersicht halber sind in den Figuren 2a und 2b nur jeweils eine Dehnstange 19 und ein Druckglied 3 mit einem Bezugszeichen versehen. Die Dehnstangen 19 erstrecken sich parallel zur Messachse M und sind beidseitig endseitig jeweils einteilig mit den Spreizgliedern 4 verbunden. Die Dehnstangen 19 und die Druckglieder bilden in ihrer Gesamtheit im Querschnitt im Wesentlichen ein Achteck. In ähnlicher Weise wie in Fig. 1 können auf die Druckglieder 3 Radialkräfte F_{R} durch nicht in den Fig. 2a und 2b dargestellte Druckschrägen und Gleitschrägen auf die Spreizglieder 4 übertragen und somit in eine zu den Radialkräften senkrechte Axialkraft gewandelt werden, welche innerhalb der Kraft-Messvorrichtung 1 analog zu der in Fig. 1 dargestellten Ausführungsform gemessen und über die Messuhr 18 anzeigbar ist. Weiterhin sind in den Fig. 2a eine Handhabe 16 und eine Halterungsanordnung 8 sowie in Fig. 2b eine Übertragungsstange 7 dargestellt, welche die gleichen Merkmale aufweisen, wie die entsprechende Handhabe 16 und Übertragungsstange 7 gemäß der in den Fig. 1 dargestellten Ausführungsform.

## Patentansprüche

1. Kraft-Messvorrichtung (1) zur integrierenden Messung mindestens dreier zentrisch wirkender Radialkräfte (F_{R}), insbesondere für Radialpressen oder Spannzangen, umfassend eine zu einer Messachse (M) konzentrische, mindestens ein Dehnelement umfassende Dehnelementanordnung und mindestens drei, in Umfangsrichtung zueinander beabstandeten Druckgliedern (3), wobei mit dem mindestens einem Dehnelement (2, 19) endseitig zwei Spreizglieder (4) verbunden sind, wobei
- an einem ersten der beiden Spreizglieder (4) ein Übertragungsglied (7) fixiert ist und
- zwischen dem zweiten der beiden Spreizglieder (4) und dem Übertragungsglied (7) ein Messaufnehmer (9) wirkt,
**dadurch gekennzeichnet, dass** die Druckglieder (3) sich über Druckschrägen (5) an korrespondierenden Gleitschrägen (6) der Spreizglieder (4) abstützen.

2. Kraft-Messvorrichtung (1) nach Anspruch 1, **dadurch gekennzeichnet, dass** die Dehnelementanordnung durch eine Dehnhülse (2) gebildet wird, um welche herum die Druckglieder (3) in Umfangsrichtung voneinander und radial zu der Dehnhülse (2) beabstandet angeordnet sind.

3. Kraft-Messvorrichtung (1) nach Anspruch 1, **dadurch gekennzeichnet, dass** die Dehnelementanordnung durch mehrere jeweils zwischen zwei benachbarten Druckgliedern (3), parallel zur Messachse angeordnete Dehnstangen (19) gebildet wird.

4. Kraft-Messvorrichtung (1) nach einem der Ansprüche 1 bis 3, **dadurch gekennzeichnet, dass** das Dehnelement (2, 19) aus einem Material mit geringerem Elastizitätsmodul besteht als die Druckglieder (3).

5. Kraft-Messvorrichtung (1) nach einem der Ansprüche 1 bis 4, **dadurch gekennzeichnet, dass** die Spreizglieder (4) mit dem Dehnelement (2, 19) eine einstückige Einheit bilden.

6. Kraft-Messvorrichtung (1) nach einem der Ansprüche 1 bis 5, **dadurch gekennzeichnet, dass** die Spreizglieder (4) eine größere radiale Erstreckung aufweisen als das Dehnelement (2).

7. Kraft-Messvorrichtung (1) nach einem der Ansprüche 1 bis 6, **dadurch gekennzeichnet, dass** die beiden Spreizelemente (4) in Form von Endscheiben ausgeführt sind.

8. Kraft-Messvorrichtung (1) nach einem der Ansprüche 1 bis 7, **dadurch gekennzeichnet, dass** das Übertragungsglied (7) als axial angeordnete Übertragungsstange (7) ausgeführt ist.

9. Kraft-Messvorrichtung (1) nach einem der Ansprüche 1 bis 8, **dadurch gekennzeichnet, dass** die Gleitschrägen (6) an den beiden Spreizgliedern (4) spiegelbildlich zueinander ausgeführt sind.

10. Kraft-Messvorrichtung (1) nach einem der Ansprüche 1 bis 9, **dadurch gekennzeichnet, dass** die Gleitschrägen (6) in hin zur Messachse (M) konvergieren.

11. Kraft-Messvorrichtung (1) nach einem der Ansprüche 1 bis 10, **dadurch gekennzeichnet, dass** die Druckglieder (3) endseitig über Sicherungselemente (14) mit radialem Spiel an den Spreizelementen (4) lagegesichert sind.

12. Kraft-Messvorrichtung (1) nach einem der Ansprüche 1 bis 11, **dadurch gekennzeichnet, dass** die Kraft-Messvorrichtung (1) endseitig mindestens eine Handhabe (16, 17) aufweist.

13. Kraft-Messvorrichtung (1) nach Anspruch 12, **dadurch gekennzeichnet, dass** beidseitig endseitig jeweils eine Handhabe (16, 17) vorgesehen ist.

14. Kraft-Messvorrichtung (1) nach einem der Ansprüche 1 bis 13, **dadurch gekennzeichnet, dass** der Messaufnehmer (9) mit einer Messuhr (18) ausgestattet ist.

15. Kraft-Messvorrichtung (1) nach einem der Ansprüche 1 bis 13, **dadurch gekennzeichnet, dass** der Messaufnehmer (9) mit einem elektrischen Signalwandler ausgestattet ist.

16. Kraft-Messvorrichtung (1) nach einem der Ansprüche 1 bis 15, **dadurch gekennzeichnet, dass** die Kraft-Messvorrichtung (1) acht Druckglieder (3) aufweist.

17. Kraft-Messvorrichtung (1) nach einem der Ansprüche 1 bis 16, **dadurch gekennzeichnet, dass** die Druckschrägen (5) und die Gleitschrägen (6) durch korrespondierende Flächen gebildet sind.

## Claims

1. A force-measuring device (1) for integrating measurement of at least three centrally acting radial forces (F_{R}), especially for radial presses or collet chucks, comprising an expander element arrangement concentric with an axis of measurement (M) and comprising at least one expander element and at least three thrust members (3) spaced apart from one another in circumferential direction, wherein two spreader members (4) are joined to the ends of the at least one expander element (2, 19),
- a transmission member (7) being fixed on a first of the two spreader members (4), and
- a measuring sensor (9) acting between the second of the two spreader members (4) and the transmission member (7),
**characterized in that**
- the thrust members (3) are braced via thrust chamfers (5) against corresponding sliding chamfers (6) of the spreader members (4),

2. The force-measuring device (1) of claim 1, wherein the expander element arrangement is formed by an expander sleeve (2), around which the thrust members (3) are disposed in a manner spaced apart from one another in circumferential direction and radially apart from the expander sleeve (2).

3. The force-measuring device (1) of claim 1, wherein the expander element arrangement is formed by several expander rods (19) disposed parallel to the axis of measurement and respectively between two neighboring thrust members (3).

4. The force-measuring device (1) of one of the claims 1 to 3, wherein the expander element (2, 19) consists of a material with lower modulus of elasticity than that of the thrust members (3).

5. The force-measuring device (1) of one of the claims 1 to 4, wherein the spreader members (4) form a one-piece unit together with the expander element (2, 19).

6. The force-measuring device (1) of one of the claims 1 to 5, wherein the spreader members (4) have a greater radial extent than the expander element (2).

7. The force-measuring device (1) of one of the claims 1 to 6, wherein the two spreader elements (4) are constructed in the form of end plates.

8. The force-measuring device (1) of one of the claims 1 to 7, wherein the transmission member (7) is constructed as an axially disposed transmission rod (7).

9. The force-measuring device (1) of one of the claims 1 to 8, wherein the sliding chamfers (6) on the two spreader members (4) are constructed as mirror images of one another.

10. The force-measuring device (1) of one of the claims 1 to 9, wherein the sliding chamfers (6) converge toward the axis of measurement (M).

11. The force-measuring device (1) of one of the claims 1 to 10, wherein the thrust members (3) are secured in position at the ends of the spreader elements (4) via securing elements (14) that provide radial play.

12. The force-measuring device (1) of one of the claims 1 to 11, wherein the force-measuring device (1) has at least one handle (16, 17) at the end.

13. The force-measuring device (1) of claim 12, wherein a handle (16, 17) is provided respectively at both ends.

14. The force-measuring device (1) of one of the claims 1 to 13, wherein the measuring sensor (9) is equipped with a dial gauge (18).

15. The force-measuring device (1) of one of the claims 1 to 13, wherein the measuring sensor (9) is equipped with an electrical signal converter.

16. The force-measuring device (1) of one of the claims 1 to 15, wherein the force-measuring device (1) has eight thrust members (3).

17. The force-measuring device (1) of one of the claims 1 to 16, wherein the thrust chamfers (5) and the sliding chamfers (6) are formed by corresponding faces.

## Revendications

1. Dispositif de mesure de la force (1) pour la mesure intégrante d'au moins trois forces radiales (F_{R}) à action centrale, notamment pour des presses radiales ou des pinces de serrage, comprenant un agencement d'élément (s) de dilatation concentrique par rapport à un axe de mesure (M), comprenant au moins un élément de dilatation et au moins trois organes de compression (3) écartés les uns des autres dans la direction périphérique, au moins deux organes d'expansion (4) étant reliés côté extrémité avec l'au moins un élément de dilatation (2, 19),
- sur un premier des deux organes d'expansion (4) étant fixé un organe de transmission (7) et
- entre le deuxième des deux organes d'expansion (4) et l'organe de transmission (7) agissant un élément capteur (9) **caractérisé en ce que** les organes de compression (3) s'appuient par l'intermédiaire d'inclinaisons de pression (5) sur des inclinaisons de glissement (6) correspondantes des organes d'expansion (4).

2. Dispositif de mesure de la force (1) selon la revendication 1, **caractérisé en ce que** l'agencement d'éléments de dilatation est formé par une douille d'expansion (2) autour de laquelle les organes de compression (3) sont placés en étant espacés les uns des autres en direction périphérique et en direction radiale par rapport à la douille d'expansion (2).

3. Dispositif de mesure de la force (1) selon la revendication 1, **caractérisé en ce que** l'agencement d'éléments de dilatation est formé par plusieurs barres d'expansion (19) placées chacune entre deux organes de compression (3) voisins, à la parallèle de l'axe de mesure.

4. Dispositif de mesure de la force (1) selon l'une quelconque des revendications 1 à 3, **caractérisé en ce que** l'élément de dilatation (2, 19) est composé d'une matière présentant un module d'élasticité plus faible que les organes de compression (3).

5. Dispositif de mesure de la force (1) selon l'une quelconque des revendications 1 à 4, **caractérisé en ce que** les organes d'expansion (4) forment une unité en monobloc avec l'élément de dilatation (2, 19).

6. Dispositif de mesure de la force (1) selon l'une quelconque des revendications 1 à 5, **caractérisé en ce que** les organes d'expansion (4) présentent une extension radiale supérieure à celle de l'élément de dilatation (2).

7. Dispositif de mesure de la force (1) selon l'une quelconque des revendications 1 à 6, **caractérisé en ce que** les deux éléments d'expansion (4) sont réalisés sous la forme de rondelles terminales.

8. Dispositif de mesure de la force (1) selon l'une quelconque des revendications 1 à 7, **caractérisé en ce que** l'organe de transmission (7) est réalisé sous la forme d'une barre de transmission (7) placée en direction axiale.

9. Dispositif de mesure de la force (1) selon l'une quelconque des revendications 1 à 8, **caractérisé en ce que** les inclinaisons de glissement (6) sur les deux organes d'expansion (4) sont réalisées en symétrique spéculaire réciproque.

10. Dispositif de mesure de la force (1) selon l'une quelconque des revendications 1 à 9, **caractérisé en ce que** les inclinaisons de glissement (6) sont convergentes en direction de l'axe de mesure (M).

11. Dispositif de mesure de la force (1) selon l'une quelconque des revendications 1 à 10, **caractérisé en ce que**, côté extrémité, les organes de compression (3) sont bloqués en position sur les éléments d'expansion (4) par l'intermédiaire d'éléments de blocage (14) avec un jeu radial.

12. Dispositif de mesure de la force (1) selon l'une quelconque des revendications 1 à 11, **caractérisé en ce que** le dispositif de mesure de la force (1) comporte côté extrémité au moins une manette (16, 17).

13. Dispositif de mesure de la force (1) selon la revendication 12, **caractérisé en ce que** côté extrémité, chaque fois une manette (16, 17) est prévue de part et d'autre.

14. Dispositif de mesure de la force (1) selon l'une quelconque des revendications 1 à 13, **caractérisé en ce que** l'élément capteur (9) est équipé d'un comparateur (18).

15. Dispositif de mesure de la force (1) selon l'une quelconque des revendications 1 à 13, **caractérisé en ce que** l'élément capteur (9) est équipé d'un convertisseur de signal électrique.

16. Dispositif de mesure de la force (1) selon l'une quelconque des revendications 1 à 15, **caractérisé en ce que** le dispositif de mesure de la force (1) comporte huit organes de compression (3).

17. Dispositif de mesure de la force (1) selon l'une quelconque des revendications 1 à 16, **caractérisé en ce que** les inclinaisons de pression (5) et les inclinaisons de glissement (6) sont formées par des surfaces correspondantes.
